# EUROPÄISCHE PATENTANMELDUNG

(11) **EP 4 606 485 A1**
(43) Veröffentlichungstag der Anmeldung: **27.08.2025**
(21) Anmeldenummer: 25150925.3
(22) Anmeldetag: 09.01.2025
(51) Int. Cl.: B02C 13/30, B02C 21/02

(54) **ANTRIEB FÜR EINE MOBILE MATERIALVERARBEITUNGSANLAGE**

(30) Priorität: 22.02.2024 DE 102024105029
(71) Anmelder: KLEEMANN GMBH, 73037 Göppingen (DE)
(72) Erfinder: GNAM, Michael, 89143 Blaubeuren (DE); DÖRZBACH, Ulrich, 70173 Heilbromm (DE)
(74) Vertreter: Herrmann, Jochen

(57) **Zusammenfassung**

Die Erfindung betrifft einen Antrieb für eine mobile Materialverarbeitungsanlage (1), insbesondere für einen Gesteinsbrecher, mit einem Verbrennungsmotor (12) und einem Elektromotor (19), wobei der Verbrennungsmotor (12) mittels einer Verbrennungsmotor-Kupplung (13) und der Elektromotor (19) mittels einer Elektromotor-Kupplung (19.2) an einen mechanischen Antriebsstrang an dessen Antriebsseite wahlweise an- oder von diesem abkoppelbar sind, wobei der Antriebsstrang eine Abtriebsseite mit wenigstens einem Abtrieb aufweist, wobei mittels dem oder den Abtrieben wenigstens ein Maschinenaggregat, insbesondere ein Brechaggregat (10), angetrieben wird. Um einen zuverlässigen Betrieb bedienerfreundlich gewährleisten zu können, kann es vorgesehen sein, dass die Verbrennungsmotor-Kupplung (13) und die Elektromotor-Kupplung (19.2) mittels einer Schalteirichtung (40) miteinander wirkverbunden sind, derart, dass die Schalteinrichtung (40) in einem Verbrennungsmotor-Betriebszustand den Verbrennungsmotor (12) mittels der Verbrennungsmotor-Kupplung (13) an den Antriebsstrang an- und den Elektromotor (12) von dem Antriebsstrang abkoppelt, und dass die Schalteinrichtung (40) in einem Elektromotor-Betriebszustand den Verbrennungsmotor (12) von dem Antriebsstrang ab- und den Elektromotor (19) mittels der Elektromotor-Kupplung (19.2) an den Antriebsstrang ankoppelt.

## Beschreibung

Die Erfindung betrifft einen Antrieb für eine mobile Materialverarbeitungsanlage, insbesondere für einen Gesteinsbrecher, mit einem Verbrennungsmotor und einem Elektromotor, wobei der Verbrennungsmotor mittels einer Verbrennungsmotor-Kupplung und der Elektromotor mittels einer Elektromotor-Kupplung an einen mechanischen Antriebsstrang an dessen Antriebsseite wahlweise an- oder von diesem abkoppelbar sind, wobei der Antriebsstrang eine Abtriebsseite mit wenigstens einem Abtrieb aufweist, wobei mittels dem oder den Abtrieben wenigstens ein Maschinenaggregat, insbesondere ein Brechaggregat, angetrieben wird.

Bei solchen erfindungsgemäßen Materialverarbeitungsanlagen dienen der Elektromotor und der Verbrennungsmotor vorzugsweise zum wechselweisen Antrieb des Maschinenaggregats, insbesondere des Brechaggregats.

Im Verbrennungsmotor-Betriebszustand treibt der Verbrennungsmotor und im Elektromotor-Betriebszustand der Elektromotor den mechanischen Antriebsstrang jeweils unter Zwischenschaltung einer schaltbaren Kupplung (Verbrennungsmotor-Kupplung bzw. Elektromotor-Kupplung) an. Diese Schaltkupplungen können nach allen gängigen Kupplungsverfahren arbeiten: Klauen-, Reib- oder Formschluss-Verfahren, nach dem Föttinger-Prinzip oder sonst einer hydraulischen Leistungsübertragung oder Kombinationen der genannten Verfahren. Vorzugsweise wird von dem mechanischen Antriebsstrang auch mindestens eine Hydraulikpumpe angetrieben, welche wiederum ein oder mehrere Maschinenaggregate antreibt, beispielsweise ein Brechaggregat, einen Lüfter, einen elektrischen Generator, einen Fahrantrieb, Hydraulikantriebe, insbesondere ein Hydraulikmotor, oder auch Hydraulikzylinder. Hydraulikmotoren können beispielsweise auch größere Verbraucher antreiben, wie Antriebe für Förderbänder, Rinnen, etc. Bei sehr effizienten Antrieben treibt der mechanische Antriebsstrang an einem Abtrieb auch mindestens einen Stromgenerator an (als Ersatz oder zusätzlich zu wenigstens einer Hydraulikpumpe), welcher elektrische Energie für leistungsstarke Nebenverbraucher liefert, wie Elektromotoren, Förderbänder, Rinnen, Siebe, Pumpenantriebe, etc. Durch die Verwendung elektrischer Antriebe für diese Nebenverbraucher anstatt hydraulischer Antriebe wird die Maschineneffizienz deutlich erhöht.

US 11,480,100 B2 offenbart eine Materialverarbeitungsanlage, die einen Antriebsstrang zum Antrieb eines Brechaggregats aufweist. An den Antriebstrang können wahlweise ein Verbrennungsmotor über eine Freilaufkupplung oder ein Elektromotor an ein Getriebe des Antriebsstrang angekoppelt werden.

Es ist Aufgabe der Erfindung, eine Materiaverarbeitungsanlage der eingangs erwähnten Art bereitzustellen, mit der ein zuverlässiger Betrieb bedienerfreundlich gewährleistet werden kann.

Diese Aufgabe wird dadurch gelöst, dass die Verbrennungsmotor-Kupplung und die Elektromotor-Kupplung mittels einer Schalteinrichtung miteinander wirkverbunden sind, derart, dass die Schalteinrichtung in einem Verbrennungsmotor-Betriebszustand den Verbrennungsmotor mittels der Verbrennungsmotor-Kupplung an den Antriebsstrang an- und den Elektromotor von dem Antriebsstrang abkoppelt und dass die Schalteinrichtung in einem Elektromotor-Betriebszustand den Verbrennungsmotor von dem Antriebsstrang ab- und den Elektromotor mittels der Elektromotor-Kupplung an den Antriebsstrang ankoppelt.

Dadurch dass die Verbrennungsmotor-Kupplung und die Elektromotorkupplung mittels der Schalteinrichtung wirkverbunden sind, ist zuverlässig sichergestellt, dass in dem jeweiligen Betriebszustand entweder der Verbrennungsmotor oder der Elektromotor an den Antriebstrang angekoppelt ist. Dies erhöht die Betriebssicherheit. Beispielsweise kann die Schalteinrichtung so ausgelegt werden, dass bei einem Ausfall des Elektromotors die Schalteinrichtung automatisch die Verbrennungsmotor-Kupplung schließt und so den Verbrennungsmotor an den Antriebstrang ankoppelt. Mit anderen Worten kann über die Schalteinrichtung eine Default-Schaltstellung vorgegeben werden, um bei einem auftretenden Schadensbild in einem Betriebszustand auf den anderen Betriebszustand zu wechseln. Hierdurch werden Fehlbedienungen durch den Benutzer ausgeschlossen und die Abläufe zum Umstellen des Betriebsmodus deutlich vereinfacht.

Gemäß einer bevorzugten Erfindungsvariante kann es vorgesehen sein, dass die Verbrennungsmotor-Kupplung derart ausgebildet ist, dass sie bei Anlegen eines ersten Schaltsignals öffnet, um den Verbrennungsmotor von dem Antriebsstrang abzukoppeln und bei Abschalten des ersten Schaltsignals selbsttätig schließt, um den Verbrennungsmotor an den Antriebsstrang anzukoppeln. Hierdurch ergibt sich eine baulich einfach gestaltete Konstruktion, mit der der Verbrennungsmotor bei Abschalten des Schaltsignals, vorzugsweise automatisch, an den Antriebstrang ankoppelt. Beispielsweise ist es denkbar, dass die Verbrennungsmotor-Kupplung als hydraulisch betätigbare Kupplung ausgelegt ist, beispielsweise als Klauenkupplung, die über ein Hydrauliksystem der Schalteinrichtung geschaltet werden kann. Dann kann im einfachsten Fall der Hydraulikdruck, welcher an der Verbrennungsmotor-Kupplung anliegt das erste Schaltsignal bilden.

Zusätzlich oder alternativ kann es auch vorgesehen sein, dass die Elektromotor-Kupplung derart ausgebildet ist, dass sie bei Anlegen eines zweiten Schaltsignals schließt, um den Elektromotor an den Antriebsstrang anzukoppeln und bei Abschalten des zweiten Schaltsignals selbsttätig öffnet, um den Elektromotor von dem Antriebsstrang abzukoppeln. Auch hier kann beispielsweise ein Hydraulikdruck des Hydrauliksystems das zweite Schaltsignal bilden.

Besonders bevorzugt kann es vorgesehen sein, dass das erste und das zweite Schaltsignal einander entsprechen, also an beiden Kupplungen das gleiche Schaltsignal anliegt. Beispielsweise kann es so sein, dass in einem Hydrauliksystem der Schalteinrichtung, gleichzeitig sowohl an der Verbrennungsmotor-Kupplung als auch an der Elektromotor-Kupplung parallel der Hydraulikdruck eines Hydrauliksystems anliegt, der das erste Schaltsignal bildet. Es kann beispielsweise so sein, dass bei einem ersten Druck (erstes Schaltsignal) im Hydrauliksystem der Verbrennungsmotor von dem Antriebsstrang abgekoppelt und der Elektromotor an den Antriebstrang angekoppelt ist. Wird im Hydrauliksystem der Druck auf einen niedrigeren Druck gestellt, so schließt die Verbrennungsmotor-Kupplung selbsttätig. Zusätzlich öffnet die Elektromotor-Kupplung. Somit ist dann ein Default-Betriebszustand erreicht, bei dem der Verbrennungsmotor an- und der Elektromotor abgekoppelt ist.

Eine konstruktiv besonders einfach aufgebaute Erfindungsvariante ist dergestalt, dass die Schalteinrichtung ein Hydrauliksystem mit einem Druckerzeuger aufweist, und dass die Verbrennungsmotor-Kupplung und die Elektromotor-Kupplung über das Hydrauliksystem mit dem wenigstens einen Druckerzeuger miteinander wirkverbunden sind.

Dabei kann es beispielsweise so sein, dass der Druckerzeuger, insbesondere eine Hydraulikpumpe, mittels Hydraulikleitungen an die Verbrennungsmotor-Kupplung und die Elektromotor-Kupplung angeschlossen ist, wobei vorzugsweise vorgesehen ist, dass mittels der Hydraulikleitungen die Verbrennungsmotor-Kupplung und die Elektromotor-Kupplung hydraulisch parallelgeschaltet sind. Diese Erfindungsvariante zeichnet sich durch einen geringen Verrohrungsaufwand des Hydrauliksystems aus. Zudem ist die in besonderem Maße betriebssicher.

Eine besonders bevorzugte Erfindungsvariante kann dergestalt sein, dass der Antriebsstrang ein Verteilergetriebe mit einer Hauptwelle aufweist, dass der Verbrennungsmotor mittels der schaltbaren Verbrennungsmotor-Kupplung im Verbrennungsmotor-Betriebszustand an die Hauptwelle ankoppelt, und dass der Elektromotor im Elektromotor-Betriebszustand mittels der schaltbaren Elektromotor-Kupplung an die Hauptwelle ankoppelt. Die Verwendung einer Hauptwelle, beispielsweise innerhalb eines Verteilergetriebes, des Antriebsstrangs reduziert den Teileaufwand erheblich. Zudem hat diese Maßnahme auch den Vorteil, dass ein Getriebe mit einer solchen Hauptwelle baulich sehr kompakt aufgebaut werden kann. Eine mögliche Erfindungsvariante kann dergestalt sein, dass eine Drehzahlanpassungs-Einrichtung vorgesehen ist, dass mittels der Drehzahlanpassung-Einrichtung die Drehzahl des Elektromotors und/oder des Verbrennungsmotors in Richtung hin zu dem Antriebsstrang, insbesondere in Richtung hin zu der Hauptwelle derart verändert ist, dass die Hauptwelle im Verbrennungsmotor-Betriebszustand und im Elektromotor-Betriebszustand mit der gleichen Drehzahl oder mit einer Schwankungsbreite von ±10% mit der gleichen Drehzahl betrieben wird.

Der Verbrennungsmotor und der Elektromotor haben jeweils einen Betriebspunkt, bei dem sie wirkungsgradoptimiert arbeiten. In den optimalen Betriebspunkten können die Drehzahlen des Elektromotors und des Verbrennungsmotors voneinander abweichen. Nun kann es aber auch so sein, dass mit dem Antriebsstrang, insbesondere der Hauptwelle, einer oder mehrere Abtriebe gekoppelt sind, die eine oder mehrere Maschinenaggregate antreiben. Auch diese Maschinenaggregate können so ausgelegt sein, dass sie auf einem bestimmten Betriebspunkt wirkungsgradoptimiert arbeiten. Damit nun ein möglichst wirkungsgradoptimierter Betrieb des Verbrennungsmotors, des Elektromotors und wenigstens eines Maschinenaggregats an einem Abtrieb beibehalten wird, wird eine Drehzahlanpassungs-Einrichtung verwendet, die sicherstellt, dass die Hauptwelle in den verschiedenen Betriebszuständen (Verbrennungsmotor-Betriebszustand und Elektromotor-Betriebszustand) mit der gleichen Drehzahl (oder mit einer Schwankungsbreite von ±10 % mit der gleichen Drehzahl) dreht.

Beispielsweise kann es vorzugsweise so sein, dass der oder die Maschinenaggregate abtriebsseitig auf die Drehzahl des Verbrennungsmotors hinsichtlich ihres optimalen Betriebs angepasst sind. Wenn nun der Elektromotor in seinem optimalen Betriebspunkt eine von der Drehzahl des Verbrennungsmotors abweichende Drehzahl abgibt, so wird mit der Drehzahlanpassungs-Einrichtung die Elektromotor-Drehzahl unter- oder übersetzt, sodass nach der Drehzahlanpassungs-Einrichtung die gleiche Drehzahl in den Antriebsstrang eingeht, die auch von dem Verbrennungsmotor zur Verfügung gestellt wird.

Wenn die Hauptwelle mit einer Schwankungsbreite von ±10 % in den verschiedenen Betriebszuständen mit der gleichen Drehzahl betrieben werden, so ergeben sich ebenfalls noch akzeptable Wirkungsgrad-Betriebszustände.

Vorzugsweise wird die Drehzahlanpassungs-Einrichtung von einem Getriebe gebildet, mit dem die Drehzahl des Elektromotors und/oder des Verbrennungsmotors unter- bzw. übersetzt werden kann. Die Drehzahlanpassungs-Einrichtung kann Teil des vorstehend erwähnten Verteilergetriebes sein. Insbesondere kann die Drehzahlanpassung-Einrichtung zusammen mit der vorstehend erwähnten Hauptwelle Teil des Verteilergetriebes sein, wodurch sich der Bauaufwand weiter vereinfacht.

Besonders bevorzugt kann es so sein, dass der Elektromotor unter Zwischenschaltung einer Elektromotor-Übersetzung an den Antriebsstrang angekoppelt ist, wobei vorzugsweise vorgesehen ist, dass die Elektromotor-Übersetzung die Drehzahl in Richtung zum Antriebsstrang hin zu einem kleineren Wert untersetzt. Hierbei kann beispielsweise die vom Verbrennungsmotor abgegebene Drehzahl unverändert bleiben. Eine solche Lösung eignet sich insbesondere dann, wenn der Verbrennungsmotor vorzugsweise wirkungsgradoptimiert auf einer kleineren Drehzahl betrieben wird als der Elektromotor und die Maschinenaggregate auf die Drehzahl des Verbrennungsmotors ausgelegt sind.

Wie dies bereits vorstehend angedeutet wurde, kann eine bevorzugte Erfindungsvariante so sein, dass die/eine Hauptwelle die Abtriebsseite des Antriebsstrangs oder eine Abtriebsseite des Antriebsstrangs bildet, dass an der Abtriebsseite wenigstens zwei getrennte Abtriebe an die Hauptwelle angeschlossen sind, und dass jeder der Abtriebe wenigstens ein Maschinenaggregat, insbesondere ein Brechaggregat, antreibt.

Wie dies vorstehend erwähnt wurde, kann oder können an den Antriebstrang ein oder mehrere Maschinenaggregate über Abtriebe angekoppelt sein. Nun kann es so sein, dass im Verbrennungsmotor-Betriebszustand oder im Elektromotor-Betriebszustand nicht alle Maschinenaggregate an den Antriebstrang angekoppelt sein müssen. Um dies zu gewährleisten kann nach einer Erfindungsvariante vorgesehen sein, dass wenigstens eine Kupplung, insbesondere eine schaltbare Kupplung, vorgesehen ist, und dass wenigstens eines der Maschinenaggregate unter Zwischenschaltung der Kupplung mit der Hauptwelle gekoppelt ist.

Beispielsweise kann es so sein, dass im Verbrennungsmotor-Betriebszustand ein elektrischer Generator zur Erzeugung von Strom angetrieben wird. Im Elektromotor-Betriebszustand kann es so sein, dass dieser Generator nicht angetrieben werden muss, da die Materialverarbeitungsanlage an eine externe Stromversorgung bereits angeschlossen ist. Dieser Strom kann genutzt werden kann, um wenigstens eine der elektrischen Komponenten der Materialverarbeitungsanlage mit Energie zu versorgen. Damit nun der Generator im Verbrennungsmotor-Betriebszustand nicht mitgeschleppt werden muss, kann dieser über eine schaltbare Kupplung abgekoppelt werden.

Somit kann es gemäß einer Erfindungsvariante beispielsweise vorgesehen sein, dass im Verbrennungsmotor-Betriebszustand mittels des Antriebsstrangs ein/der elektrische(-r) Generator angetrieben wird, dass der elektrische Generator im Verbrennungsmotor-Betriebszustand wenigstens einen Elektromotor mit Strom versorgt, dass im Elektromotor-Betriebszustand der elektrische Generator mittels wenigstens einer Generator-Kupplung vom Antriebsstrang getrennt ist, und dass der wenigstens eine Elektromotor im Elektromotor-Betriebszustand von einer Spannungsversorgung mit Strom versorgt wird.

Eine mögliche Erfindungsvariante kann dergestalt sein, dass wenigstens eine Drehzahlübersetzung oder eine Drehzahluntersetzung vorgesehen ist, und dass wenigstens eines der Maschinenaggregate unter Zwischenschaltung der Drehzahlübersetzung oder der Drehzahluntersetzung an den Antriebstrang, insbesondere die Hauptwelle, angekoppelt ist. Somit kann die vom Antriebstrang abgegebene Drehzahl jeweils individuell auf das an dem Abtrieb angeschlossenen Maschinenaggregat angepasst werden.

Diese Maßnahme eignet sich in besonderer Weise dann, wenn eine Hauptwelle verwendet ist, an der mehrere Abtriebe angeschlossen sind. Hierdurch ergibt sich eine kompakte Bauweise. Insbesondere kann auf baulich einfache Weise ein Verteilergetriebe realisiert werden, bei dem, insbesondere die Drehzahlübersetzung (-en) und/oder oder die Drehzahluntersetzung (-en) in einem Getriebe, insbesondere in einem Getriebegehäuse, untergebracht sind.

Gemäß einer Erfindungsvariante kann es somit vorgesehen sein, dass die Hauptwelle zumindest bereichsweise und wenigstens einer der Abtriebe zumindest bereichsweise innerhalb eines Getriebegehäuses eines Verteilergetriebes des Antriebsstrangs untergebracht sind.

Nicht abschließend aufgezählt können bei einer Materialverarbeitungsanlage als Maschinenaggregat das Brechaggregat und/oder ein Fahrantrieb und /oder eine Hydraulikpumpe, und/oder ein Lüfter und/oder ein elektrischer Generator Verwendung finden. Der Fahrantrieb dient zum Verfahren der mobilen Materialverarbeitungsanlage und kann vorzugsweise einen hydraulischen Antrieb aufweisen. Der Lüfter kann beispielsweise Verwendung finden, um eine Baueinheit zu kühlen, beispielsweise den Verbrennungsmotor. Mittels des elektrischen Generators kann Strom erzeugt werden, um insbesondere im Verbrennungsmotor-Betriebszustand elektrische Komponenten der Materialverarbeitungsanlage mit Strom zu versorgen.

Eine Erfindungsvariante kann dergestalt sein, dass eines der Maschinenaggregate, insbesondere der/ein Fahrantrieb zum Verfahren der Materialverarbeitungsanlage, mittels einer zugeordneten Kupplung, insbesondere einer Fahrantriebkupplung, an den Antriebsstrang angekoppelt ist, dass der Antriebsstrang eine Hydraulikpumpe antreibt, dass die Hydraulikpumpe mittels einer Hydraulikleitung an diese zugeordnete Kupplung angeschlossen ist, um diese zu schalten.

Die Erfindung wird im Folgenden anhand eines in den Zeichnungen dargestellten Ausführungsbeispiels näher erläutert. Es zeigen:
- Figur 1: in schematischer Darstellung eine Materialverarbeitungsanlage 1 mit einem Brechaggregat 10 in Seitenansicht und
- Figur 2: eine Materialverarbeitungsanlage in schematischer Blockbilddarstellung.

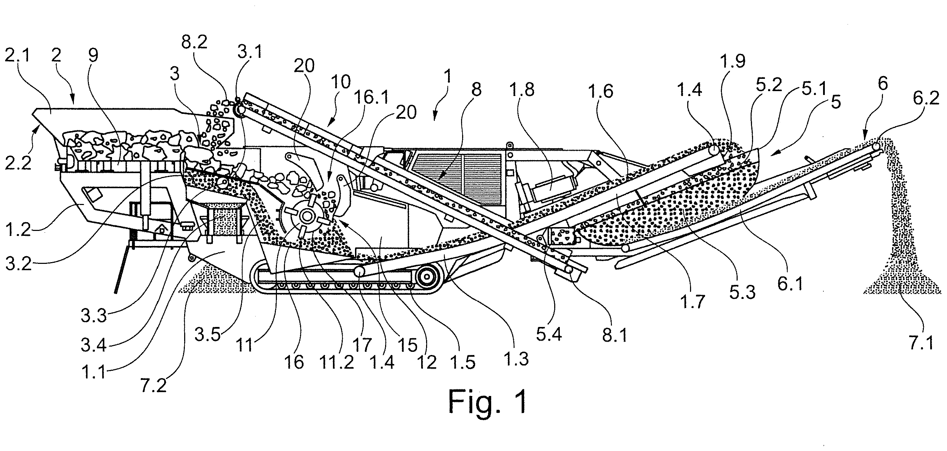

Figur 1 zeigt eine Materialverarbeitungsanlage 1 in Form einer Brechanlage mit einem Materialverarbeitungsaggregat in Form eines Brechaggregats 10. Die Materialverarbeitungsanlage 1 ist als mobile Materialverarbeitungsanlage 1 ausgebildet und weist daher Fahrwerke 1.5 auf. Denkbar ist es jedoch auch, dass es sich bei der Materialverarbeitungsanlage 1 um eine stationäre Materialverarbeitungsanlage 1 handelt.

Die Materialverarbeitungsanlage 1 weist ein Chassis 1.1 auf, welches die Maschinenkomponenten oder zumindest einen Teil der Maschinenkomponenten trägt. An seinem rückwärtigen Ende kann das Chassis 1.1 vorzugsweise einen Ausleger 1.2 aufweisen. Im Bereich des Auslegers 1.2 ist ein Material-Zuführbereich gebildet.

Der Material-Zuführbereich kann einen Aufgabetrichter 2 und eine Materialzuführeinrichtung 9 umfassen.

Der Aufgabetrichter 2 kann zumindest teilweise von Trichterwänden 2.1, die in Richtung der Längserstreckung der Materialverarbeitungsanlage 1 verlaufen und einer quer zur Längserstreckung verlaufenden Rückwand 2.2 gebildet sein. Der Aufgabetrichter 2 führt zu der Materialzuführeinrichtung 9.

Die Materialzuführeinrichtung 9 kann, wie im vorliegenden Ausführungsbeispiel dargestellt, eine Förderrinne aufweisen, die mittels eines Vibrationsantriebs antreibbar ist. Über den Aufgabetrichter 2 kann, beispielsweise mittels eines Radladers, zu zerkleinerndes Gut in die Materialverarbeitungsanlage 1 eingefüllt und auf die Förderrinne aufgegeben werden.

Von der Förderrinne gelangt das zu zerkleinernde Gut in den Bereich einer Siebeinheit 3. Diese Siebeinheit 3 kann auch als Vorsieb-Anordnung bezeichnet werden. Im Bereich der Siebeinheit 3 ist wenigstens ein Siebdeck 3.1, 3.2 angeordnet. Im vorliegenden Ausführungsbeispiel sind zwei Siebdecks 3.1, 3.2 verwendet.

An dem oberen Siebdeck 3.1 wird von dem zu zerkleinernden Material eine Teilfraktion ausgesiebt. Diese Teilfraktion hat bereits eine ausreichende Korngröße, die nicht mehr in der Materialverarbeitungsanlage 1 zerkleinert werden muss. Insofern kann diese ausgesiebte Teilfraktion in einem Bypasskanal 3.5 vorbei an dem Brechaggregat 10 geleitet werden.

Wenn ein zweites Siebdeck 3.2 in der Siebeinheit 3 verwendet ist, so kann aus der Teilfraktion, die unterhalb des Siebdecks 3.1 anfällt, eine weitere Feinpartikel-Fraktion ausgesiebt werden. Diese Feinpartikel-Fraktion kann unterhalb des Siebdecks 3.2 zu einem Seitenaustragband 3.4 geführt werden. Von dem Seitenaustragband 3.4 wird die Feinpartikel-Fraktion abgeleitet und auf eine seitlich der Maschine angeordnete Halde 7.2 gefördert.

Wie Figur 1 veranschaulicht, kann es sich bei der Siebeinheit 3 um ein Vibrationssieb mit einem Siebantrieb 3.3 handeln. Der Siebantrieb 3.3 versetzt das Siebdeck 3.1 und/oder das Siebdeck 3.2 in Vibrationsbewegungen. Aufgrund der geneigten Anordnung der Siebdecks 3.1, 3.2 und in Verbindung mit den Vibrationsbewegungen wird ein Materialtransport auf den Siebdecks 3.1, 3.2 hin in Richtung zu dem Brechaggregat 10 bzw. zu dem Bypasskanal 3.5 bewirkt.

Das von dem Siebdeck 3.1 kommende zu zerkleinernde Material wird dem Brechaggregat 10 zugeleitet, wie dies Figur 1 erkennen lässt.

Das Brechaggregat 10 kann beispielsweise in Form eines Rotationsprall-Brechaggregats oder eines Backenbrechaggregats ausgebildet sein. Ist wie in Figur 1 ein Rotationsprall-Brechaggregat verwendet, so weist es beispielsweise einen Schlagrotor 11 auf, der von einem Verbrennungsmotor 12 angetrieben wird. In Figur 1 verläuft die Rotationsachse 17 des Schlagrotors 11 horizontal in Richtung der Bildtiefe. Der Schlagrotor 11 ist in einem Brechraum 16.1 untergebracht.

Ist ein Backenbrechaggregat verwendet, so sind zwei Brechbacken einander gegenübergestellt, die zwischen sich einen konvergierenden Brechschacht einschließen, der bis hin zu einem Brechspalt führt. Zumindest eine der Brechbacken kann von dem Verbrennungsmotor 12 angetrieben werden, um im konvergierenden Brechspalt das eingefüllte Brechgut zu brechen.

Der Schlagrotor 11 kann beispielsweise an seinem Außenumfang mit Schlagleisten 11.2 bestückt sein. Gegenüberliegend dem Schlagrotor 11 können beispielsweise Wandelemente, vorzugsweise in Form von Prallschwingen 20, angeordnet sein. Bei drehendem Schlagrotor 11 wird das zu zerkleinernde Material mittels der Schlagleisten 11.2 nach außen geschleudert. Dabei trifft dieses Material auf die Prallschwingen 20 und wird aufgrund der hohen kinetischen Energie zerkleinert. Wenn das zu zerkleinernde Material eine ausreichende Korngröße aufweist, die es ermöglicht, dass die Materialteilchen durch einen Brechspalt 15 zwischen den Prallschwingen 20 und den radial äußeren Enden der Schlagleisten 11.2 hindurchgeführt werden können, so verlässt das zerkleinerte Gut das Brechaggregat 10 über den Brecherauslass 16.

Denkbar ist es, dass im Bereich des Brecherauslasses 16 das vom Brechaggregat 10 kommende und zerkleinerte Material mit dem aus dem Bypasskanal 3.5 kommenden Material zusammengeführt und auf einen Bandförderer 1.3 gebracht wird. Mit dem Bandförderer 1.3 kann das Material aus dem Arbeitsbereich des Brechaggregats 10 herausgeführt werden.

Wie die Zeichnungen zeigen, kann der Bandförderer 1.3 ein endlos umlaufendes Förderband aufweisen, das einen Lasttrum 1.6 und einen Leertrum 1.7 aufweist. Der Lasttrum 1.6 dient dazu das gebrochene Material, welches aus dem Brecherauslass 16 des Brechaggregats 10 fällt, aufzufangen und abzutransportieren. An den Bandenden kann das Förderband zwischen dem Lasttrum 1.6 und dem Leertrum 1.7 mittels Umlenkrollen 1.4 umgelenkt werden. Im Bereich zwischen den Umlenkrollen 1.4 können Führungen, insbesondere Tragrollen vorgesehen sein, um die Förderrichtung des Förderbands zu verändern, dem Förderband eine bestimmte Form zu geben und/oder das Förderband zu stützen.

Der Bandförderer 1.3 weist einen Bandantrieb auf, mittels dem der Bandförderer 1.3 angetrieben werden kann. Der Bandantrieb kann vorzugsweise am Abwurfende 1.9 oder im Bereich des Abwurfendes 1.9 des Bandförderers 1.3 angeordnet sein.

Der Bandförderer 1.3 kann, beispielsweise mittels des Bandantriebs, an eine Steuereinrichtung mittels einer Steuerleitung angeschlossen sein.

Es können ein oder mehrere weitere Bandförderer 6 und/oder ein Rückführförderer 8 verwendet sein, die prinzipiell die gleiche Bauweise aufweisen wie der Bandförderer 1.3. Insofern kann auf die vorstehenden Ausführungen Bezug genommen werden.

Im Bereich zwischen dem Aufgabeende und dem Abwurfende 1.9 kann ein Magnet 1.8, insbesondere ein Elektromagnet, oberhalb des Lasttrums 1.6 angeordnet sein. Mit dem Magnet 1.8 lassen sich Eisenteile aus dem gebrochenen Gut abheben und aus dem Förderbereich des Bandförderers 1.3 heraus bewegen.

In Transportrichtung nach dem Bandförderer 1.3 kann eine Nachsiebvorrichtung 5 angeordnet sein. Die Nachsiebvorrichtung 5 weist ein Siebgehäuse 5.1 auf, in dem wenigstens ein Siebdeck 5.2 untergebracht ist. Unterhalb des Siebdecks 5.2 ist ein Gehäuseunterteil 5.3 gebildet, welcher als Sammelraum für das am Siebdeck 5.2 ausgesiebte Material dient.

Das Gehäuseunterteil 5.3 schafft über eine Öffnung eine räumliche Verbindung zu einem weiteren Bandförderer 6. Hier bildet der weitere Bandförderer 6 seinen Aufgabebereich 6.1, wobei das ausgesiebte Material im Aufgabebereich 6.1 auf den Lasttrum des weiteren Bandförderers 6 geleitet wird. Der weitere Bandförderer 6 fördert das ausgesiebte Material hin zu seinem Abwurfende 6.2. Von dort gelangt das ausgesiebte Material auf eine Halde 7.1.

Das am Siebdeck 5.2 der Nachsiebvorrichtung 5 nicht ausgesiebte Material wird vom Siebdeck 5.2 auf ein Stichband 5.4 gefördert. Das Stichband 5.4 kann ebenfalls als ein Bandförderer ausgebildet sein, sodass auf die oben in Bezug auf den Bandförderer 1.3 gemachten Ausführungen verwiesen werden kann. Die Transportrichtung des Stichbands 5.4 verläuft in Figur 1 in Richtung der Bildtiefe.

An seinem Abwurfende übergibt das Stichband 5.4 das nicht ausgesiebte Material, das auch als Überkorn bezeichnet wird, auf einen Aufgabebereich 8.1 des Rückführförderers 8. Der Rückführförderer 8, der als Bandförderer ausgebildet sein kann, fördert das Überkorn in Richtung hin zum Aufgabetrichter 2. An seinem Abwurfende 8.2 übergibt der Rückführförderer 8 das Überkorn in den Materialfluss, insbesondere in den Material-Zuführbereich. Das Überkorn kann mithin dem Brechaggregat 10 erneut zugeführt und hier auf die gewünschte Partikelgröße gebrochen werden.

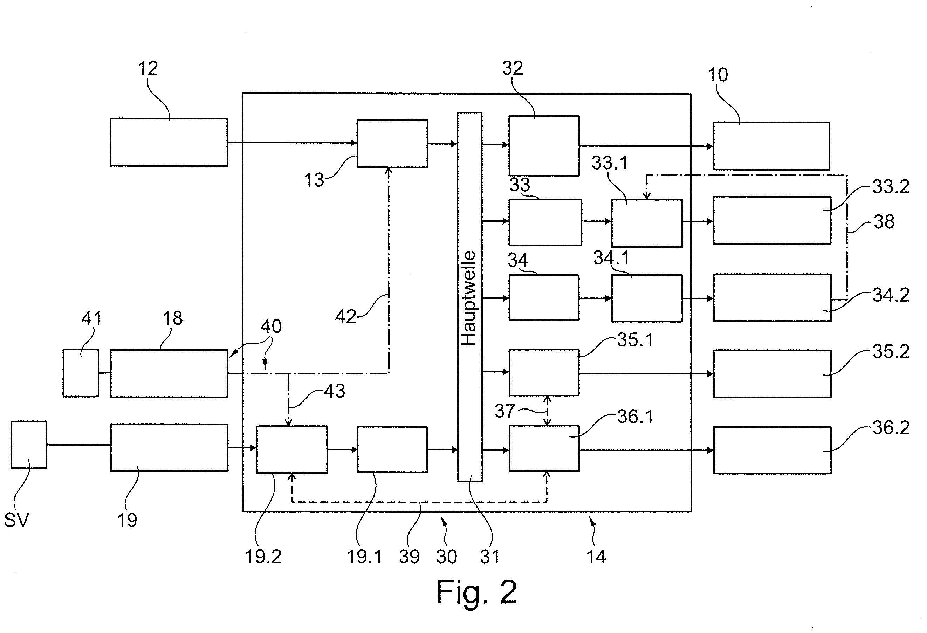

Figur 2 zeigt die Materialverarbeitungsanlage 1 gemäß Figur 1 in einer schematischen Blockbilddarstellung. Wie diese Darstellung veranschaulicht, besitzt die Materialverarbeitungsanlage 1 den Verbrennungsmotor 12. Der Verbrennungsmotor 12 kann mittels einer Verbrennungsmotor-Kupplung 13 wahlweise an einen Antriebsstrang 14 angekoppelt oder von diesem abgekoppelt werden.

Zusätzlich weist die Materialverarbeitungsanlage 1 auch einen Elektromotor 19 auf. Der Elektromotor 19 kann über eine Elektromotor-Kupplung 19.2 wahlweise an den Antriebstrang 14 angekoppelt oder von diesem abgekoppelt werden. Die Verbrennungsmotor-Kupplung 13 und die Elektromotor-Kupplung 19.2 sind als schaltbare Kupplungen, beispielsweise als schaltbare Klauenkupplungen, ausgebildet. Vorzugsweise können diese Kupplungen hydraulisch angetrieben werden, um sie zwischen einer geschlossenen und einer geöffneten Position zu verstellen.

Der Elektromotor 19 kann entweder unmittelbar lösbar an eine externe Spannungsversorgung SV angeschlossen werden, oder über die interne Spannungsversorgung 41 der Materialverarbeitungsanlage 1 mittelbar an die externe Spannungsversorgung SV lösbar angeschlossen werden.

Es kann so sein, dass die Verbrennungsmotor-Kupplung 13 und die Elektromotor-Kupplung 19.2 an eine Schalteinrichtung 40 angeschlossen sind, derart dass sie miteinander wirkverbunden sind.

Vorzugsweise ist es vorgesehen, dass die Schalteinrichtung 40 ein Hydrauliksystem mit einem Druckerzeuger 18 aufweist. Mittels des Druckerzeugers 18 kann Hydraulikfluid im Hydrauliksystem unter Druck gesetzt werden. Bei dem Druckerzeuger 18 kann es sich beispielsweise um eine Hydraulikpumpe handeln, die von der internen Spannungsversorgung 41 mit Strom versorgt wird. Die interne Spannungsversorgung 41 kann das Bordnetz der Material-Verarbeitungsanlage 1 sein.

Der Druckerzeuger 18 ist über Hydraulikleitungen 42, 43 an die Verbrennungsmotor-Kupplung 13 und die Elektromotor-Kupplung 19.2 angeschlossen, wie dies die strichpunktierten Linien in Figur 2 zeigen. Dabei sind diese beiden Kupplungen 13 und 19.2 hydraulisch parallelgeschaltet. Denkbar ist es jedoch auch, dass die beiden Kupplungen 13, 19.2 sequentiell geschaltet werden. Dazu können beispielsweise vor den Kupplungen 13, 19.2 noch Schaltventile sitzen um ein sequentielles Schalten zu ermöglichen. Somit können die Verbrennungsmotor-Kupplung 13 und die Elektromotor-Kupplung 19.2 mittels des Druckerzeugers 18 gleichzeitig geschaltet werden.

Bei der Verbrennungsmotor-Kupplung 13 kann es sich um eine Kupplung handeln, die in einem ersten Schaltzustand den Verbrennungsmotor 12 an den Antriebsstrang 14 ankoppelt (geschlossene Stellung der Kupplung) und in einem zweiten Schaltzustand diesen von dem Antriebsstrang 14 (geöffnete Stellung der Kupplung) abkoppelt.

Vorzugsweise ist es so, dass die Verbrennungsmotor-Kupplung 13 in den zweiten Schaltzustand gebracht wird (Verbrennungsmotor abgekoppelt), wenn in der Hydraulikleitung 42 ein von dem Druckerzeuger 18 erzeugter Schaltdruck ansteht. Fällt der Druck in der Hydraulikleitung 42 auf einen Druck unter dem Schaltdruck, so verstellt sich die Verbrennungsmotor-Kupplung 13 selbsttätig in den ersten Schaltzustand. Hierzu kann es beispielsweise vorgesehen sein, dass es sich bei der Verbrennungsmotor-Kupplung 13 um eine federvorgespannte Kupplung handelt, die beim Wechsel vom ersten in den zweiten Schaltzustand gegen die Vorspannung einer Feder verstellt wird. Vorzugsweise schaltet die Verbrennungsmotor-Kupplung 13 somit dann, wenn die Anlage nicht an die externe Stromversorgung ("z.B. Landstromversorgung") angeschlossen ist automatisch in den ersten Schaltzustand, so dass der Verbrennungsmotor im "Verbrennermodus" an den mechanischen Antriebstrang angekoppelt ist. Nur bei vorhandenem Landstromanschluss kann somit ein Umschalten in den Elektromodus ermöglicht werden.

Bei der Elektromotor-Kupplung 19.2 kann es sich um eine Kupplung handeln, die in einem ersten Schaltzustand den Elektromotor 19 an den Antriebsstrang 14 ankoppelt und in einem zweiten Schaltzustand diesen von dem Antriebsstrang 14 abkoppelt.

Vorzugsweise ist es so, dass die Elektromotor-Kupplung 19.2 in den ersten Schaltzustand verbracht wird (Elektromotor angekoppelt), wenn in der Hydraulikleitung 43 der von dem Druckerzeuger 18 erzeugte Schaltdruck ansteht. Fällt der Druck in der Hydraulikleitung 42 auf einen Druck unter dem Schaltdruck, so verstellt sich die Elektromotor-Kupplung 19 selbsttätig in den zweiten Schaltzustand (Elektromotor abgekoppelt). Hierzu kann es beispielsweise vorgesehen sein, dass es sich bei der Elektromotor-Kupplung 19 um eine federvorgespannte Kupplung handelt, die beim Wechsel vom zweiten in den ersten Schaltzustand gegen die Vorspannung einer Feder verstellt wird.

Der vorstehend erwähnte Schaltdruck bildet somit ein Schaltsignal, mittels dem die Elektromotor-Kupplung 19.1 und/oder die Verbrennungsmotor-Kupplung 13 zwischen ihren beiden Schaltzuständen verstellt werden können.

Figur 2 veranschaulicht weiterhin, dass der Elektromotor 19 mittelbar über eine Drehzahlanpassungs-Einrichtung 19.1 an den Antriebstrang 14 angekoppelt sein kann. Zusätzlich oder alternativ kann es auch vorgesehen sein, dass auch der Verbrennungsmotor 12 mittelbar über eine in Figur 2 nicht dargestellte Drehzahlanpassungs-Einrichtung an den Antriebstrang 14 angekoppelt ist. Mittels der oder den Drehzahlanpassungs-Einrichtungen 19.1 kann die Abtriebsdrehzahl des Verbrennungsmotors 12 bzw. des Elektromotors 19 über- oder untersetzt werden. Vorzugsweise ist es so, dass die Drehzahlen des Verbrennungsmotors und des Elektromotors, nachdem sie über- oder untersetzt wurde(-n), gleich sind.

Figur 2 veranschaulicht weiter, dass der Antriebsstrang 14 ein Verteilergetriebe 30 mit einer Hauptwelle 31 aufweisen kann. Der Verbrennungsmotor 12 und der Elektromotor 19 sind an diese Hauptwelle 31 angekoppelt, wie Figur 2 zeigt.

Abtriebsseitig ist die Hauptwelle 31 mit wenigstens einem Maschinenaggregat gekoppelt, um dieses mechanisch anzutreiben. Beispielsweise ist es denkbar, dass als Maschinenaggregat das Brechaggregat 10, wenigstens ein Fahrantrieb 33.2 des Fahrwerks 1.5, wenigstens eine Hydraulikpumpe 34.2, wenigstens ein Lüfter 35.2 zur Kühlung des Verbrennungsmotors 12 und/oder wenigstens ein elektrischer Generator 36.2 Verwendung findet(-en).

Wenigstens eines der Maschinenaggregate kann, beispielsweise unmittelbar, an die Hauptwelle 31 angekoppelt sein. Zusätzlich oder alternativ ist es auch denkbar, dass wenigstens eines der Maschinenaggregate mittelbar unter Zwischenschaltung einer Kupplung und/oder einer Drehzahlübersetzung oder einer Drehzahluntersetzung an die Hauptwelle 31 angekoppelt ist.

Figur 2 veranschaulicht, dass das Brechaggregat 10, vorzugsweise über eine schaltbare Brecher-Kupplung 32, an die Hauptwelle 31 angekoppelt ist. Die Brecher-Kupplung 32 ermöglicht es das Brechaggregat 10 wahlweise an die Hauptwelle 31 anzukoppeln oder von dieser abzukoppeln.

Weiterhin ist es denkbar, dass das Brechaggregat 10 unter Zwischenschaltung einer Drehzahlüber- oder -untersetzung an die Hauptwelle 31 angekoppelt ist. Hierbei kann es sich beispielsweise um einen endlos umlaufenden Bandantrieb handeln, der um zwei zueinander beabstandet angeordnete Umlenkrollen geführt ist. Die Umlenkrollen haben einen unterschiedlichen Durchmesser um das Übersetzungsverhältnis bzw. das Untersetzungsverhältnis vorzugeben.

Figur 2 veranschaulicht weiter, dass der Fahrantrieb 33.2 mittelbar unter Zwischenschaltung einer Fahrantrieb-Kupplung 33.1 und einer Fahrantrieb-Übersetzung 33 an die Hauptwelle 31 angekoppelt ist. Zusätzlich oder alternativ kann es auch vorgesehen sein, dass die Hydraulikpumpe 34.2 unter Zwischenschaltung einer Hydraulikpumpen-Kupplung 34.1 und einer Hydraulikpumpen-Übersetzung 34 an die Hauptwelle 32 mittelbar angekoppelt ist. Denkbar ist es, dass anstelle der Hydraulik-Kupplung 34.1 eine starre Kopplung zwischen der Hydraulikpumpe 34.2 und der Hauptwelle 31 vorgesehen ist. Dies empfiehlt sich, wenn die Hydraulikpumpe 34.2 sowohl im Verbrennungsmotor-Betriebszustand als auch im Elektromotor-Betriebszustand verwendet werden soll.

Weiterhin zeigt Figur 2, dass der Lüfter 35.2 über eine Lüfter-Kupplung 35.1 und der Generator 36.2 über eine Generator-Kupplung 36.1 und/oder über eine Lüfter-Übersetzung bzw. eine Generator-Übersetzung mittelbar an die Hauptwelle 31 angekoppelt sind.

Ausweislich Figur 2 sind die Elektromotor-Kupplung 19.2 und die Generator-Kupplung 36.1 miteinander gekoppelt (Kopplung 39). Bei der Kopplung 39 kann es sich vorzugsweise um eine mechanische Kopplung 39 oder eine hydraulische Kopplung 39 handeln. Insbesondere kann es so sein, dass mittels der Kopplung 39 die Elektromotor-Kupplung 19.2 und die Generator-Kupplung 36.1 zu einer Umschaltkupplung zusammengefasst sind.

Die Kopplung 39 bewirkt, dass dann, wenn die Elektromotor-Kupplung 19.2 geschlossen und der Elektromotor 19 an die Hauptwelle 31 angekoppelt ist, die Generator-Kupplung 36.1 geöffnet und der Generator 36.2 von der Hauptwelle 31 abgekoppelt ist.

Schaltet die Elektromotor-Kupplung 19.2 um, sodass der Elektromotor 19.2 von der Hauptwelle 31 abgekoppelt ist, so bewirkt die Kopplung 39, dass die Generator-Kupplung 36.1 geschlossen und der Generator 36.2 an die Hauptwelle 31 angekoppelt wird.

Zusätzlich oder alternativ kann eine solche Kopplung 39 auch zwischen der Elektromotor-Kopplung 19.2 und der Lüfter-Kupplung 35.1 oder einer sonstigen Kupplung am Abtrieb der Hauptwelle 31 vorgesehen sein.

Denkbar ist es auch, dass eine Kopplung 39 auch mittelbar vorliegen kann. Dies veranschaulicht Figur 2. Dort ist gezeigt, dass die Lüfter-Kupplung 35.1 und die Generator-Kupplung 36.1 mechanisch über eine Kopplung 37 miteinander gekoppelt werden, sodass diese beiden Kupplungen 35.1, 36.1 gemeinsam öffnen oder schließen. Selbstverständlich ist es auch denkbar, dass anstelle der beiden Kupplungen 35.1 oder 36.1 nur eine Kupplung 35.1, 36.1 verwendet wird, um den Lüfter 35.2 und den Generator 36.2 an die Hauptwelle 32 anzukoppeln oder von dieser abzukoppeln.

Bevorzugt ist es vorgesehen, dass die Elektromotor-Kupplung 19.2 bei Anliegen des Schaltsignals (zum Beispiel des Schaltdrucks in dem Hydrauliksystem (Hydraulikleitungen 42, 43)) geschlossen ist, um eine Kopplung des Elektromotors 19 mit der Hauptwelle 31 bereitzustellen. Die Kopplung 39 bewirkt dann vorzugsweise eine Öffnung (oder ein Schließen) einer weiteren Kupplung, insbesondere die Generator-Kupplung 36.1 und/oder die Lüfter-Kupplung 35.1 wird/werden geschlossen. Steht das Schaltsignal nicht mehr an oder wird das Schaltsignal gewechselt (Veränderung des Hydraulikdrucks), so schaltet die Elektromotor-Kupplung 19.2 in den geöffneten Zustand und der Elektromotor 19 wird von der Hauptwelle 31 abgekoppelt. Über die Kopplung 39 wird dann bewirkt, dass auch die weitere Kupplung, insbesondere die Generator-Kupplung 36.1 und/oder die Lüfter-Kupplung 35.1 umschaltet. Wie Figur 2 zeigt, werden diese beiden Kupplungen 36.1, 35.1 dann geschlossen und der Generator 36.2 und der Lüfter 35.2 an die Hauptwelle 31 angekoppelt. Mit anderen Worten wird dann, wenn der Elektromotor 19 vom Antriebsstrang abgekoppelt ist, der Generator und 36.2 und/oder der Lüfter 35.2 eingekuppelt.

Bei abgekoppeltem Elektromotor 19 wird der Verbrennungsmotor 12 angekoppelt und die Anlage steht im Verbrennungsmotor-Betriebszustand.

Im vorliegenden Ausführungsbeispiel ist der Druckerzeuger 18 mittelbar über die interne Spannungsversorgung 41 an die externe Spannungsversorgung SV angeschlossen.

Denkbar und bevorzugt ist es jedoch, dass der Druckerzeuger 18 an die externe Spannungsversorgung SV angekoppelt ist, an die auch der Elektromotor 19 angeschlossen ist. Dies stellt sicher, dass ein Wechsel auf den Elektromotor-Betriebszustand nur vorgenommen werden kann, wenn ein Anschluss zu der externen Spannungsversorgung SV hergestellt wurde. Wenn kein Anschluss an die externe Spannungsversorgung SV vorliegt, so fällt das System, vorzugsweise automatisch, wieder in den Verbrennungsmotor-Betriebszustand zurück.

Nachstehend wird die Funktion der Materialverarbeitungsanlage 1 gemäß Figur 2 näher erläutert. Wenn der Verbrennungsmotor 12 über die Verbrennungsmotor-Kupplung 13 an die Hauptwelle 31 angekoppelt ist (Verbrennungsmotor-Kupplung 13 geschlossen), so ist der Elektromotor 19 von der Hauptwelle 31 abgekoppelt und die Elektromotor-Kupplung 19.2 geöffnet. Die Materialverarbeitungsanlage 1 befindet sich im Verbrennungsmotor-Betriebszustand.

Im Verbrennungsmotor-Betriebszustand kann der Verbrennungsmotor 12 über die Hauptwelle 31 zumindest einen Teil der Abtriebe antreiben, um die Maschinenaggregate mit mechanischer Antriebsleistung zu versorgen. Somit können der Verbrennungsmotor 12, das Brechaggregat 10, die Hydraulikpumpe 34.2, der Lüfter 35.2 und der Generator 36.2 angetrieben werden.

Soll die Materialverarbeitungsanlage 1 im Fahrbetrieb verfahren werden, so wird der Fahrantrieb 33.2 aktiviert. Hierzu kann die Fahrantrieb Kupplung 33.1 geschlossen werden. Dann treibt der Verbrennungsmotor 12 den Fahrantrieb 33.2 an.

Wie Figur 2 veranschaulicht, kann es vorzugsweise so sein, dass es sich bei der Fahrantrieb-Kupplung 33.1 um eine hydraulische Kupplung handelt. Dann kann diese Fahrantrieb-Kupplung 33.1 von der Hydraulikpumpe 34.2 über eine Hydraulikleitung 38 mit Hydraulikfluid versorgt werden, um sie zwischen ihrer geöffneten und ihrer geschlossenen Kupplungsstellung zu schalten.

Ist die Materialverarbeitungs-Anlage 1 in die gewünschte Position verfahren worden, so kann die Fahrantrieb-Kupplung 33.1 wieder geöffnet und der Fahrantrieb 33.2 von der Hauptwelle 31 abgekoppelt werden.

Während des Verbrennungsmotor-Betriebszustandes erzeugt der Generator 36.2 bei geschlossener Generator-Kupplung 36.1 Strom, um elektrische Komponenten oder Maschinenaggregate der Materialverarbeitungs-Anlage 1 zu versorgen.

Beispielsweise können ein oder mehrere Elektromotoren von dem Generator 36.2 mit Strom versorgt werden. Bei den Elektromotoren kann es sich beispielsweise um Motoren handeln, die wenigstens einen Bandförderer 1.3, den Siebantrieb 3.3, das Seitenaustragband 3.4, die Nachsiebvorrichtung 5, das Stichband 5.4, einen weiteren Bandförderer 6, den Rückführförderer 8 und/oder die Materialzuführeinrichtung 9 antreiben. Denkbar ist es auch, dass der Magnet 1.8 als Elektromagnet ausgebildet und von dem Generator 36.2 mit Strom versorgt wird.

Die Hydraulikpumpe 34.2 kann auch dazu dienen Hydraulikkomponenten der Materialverarbeitungsanlage 1 mit Hydraulikfluid zu versorgen. Beispielsweise kann es vorgesehen sein, dass mittels der Hydraulikpumpe 34.2 wenigstens ein Hydraulikmotor und/oder wenigstens ein Hydraulikventil mit Hydraulikfluid versorgt wird.

Soll nun vom Verbrennungsmotor-Betriebszustand auf den Elektromotor-Betriebszustand gewechselt werden, so wird der Verbrennungsmotor 12 mittels der Verbrennungsmotor-Kupplung 13 von der Hauptwelle 31 abgekoppelt. Der Elektromotor 19 wird mittels der Elektromotor-Kupplung 19.2 an die Hauptwelle 31 angekoppelt. Zu diesem Zweck kann es beispielsweise vorgesehen sein (wie dies oben bereits erläutert wurde), dass mit dem Druckerzeuger 18 als Schaltsignal ein Hydraulikdruck in den Hydraulikleitungen 42 und 43 aufgebaut wird. Dieser Hydraulikdruck bewirkt eine Verstellung der Verbrennungsmotor-Kupplung 13 und der Elektromotor-Kupplung 19.2.

Somit ist nun alleine der Elektromotor 19 an die Hauptwelle 31 antriebsseitig angekoppelt. Der Elektromotor 19 treibt nun wenigstens eines der vorstehend erwähnten Maschinenaggregate über die Hauptwelle 31 an, wobei dieser Antrieb auf die gleiche Weise erfolgen kann, wie im Verbrennungsmotor-Betriebszustand.

Somit muss nachfolgend nur auf die Änderungen eingegangen werden, die sich im Elektromotor-Betriebszustand einstellen. Im Übrigen kann auf die vorstehenden Ausführungen verwiesen werden.

Beispielsweise kann es nun so sein, dass aufgrund der Kopplung 39 zwischen der Elektromotor-Kupplung 19.2 und der Generator-Kupplung 36.1 und/oder der Lüfter-Kupplung 35.1 die Kopplung des Generator 36.2 und/oder des Lüfters 35.2 zu der Hauptwelle 31 aufgehoben wird. Tatsächlich werden diese Komponenten während des Elektromotor-Betriebszustand nicht benötigt und müssen nicht mitgeschleppt werden. Es kann nämlich vorgesehen sein, dass die Strom-Versorgung wenigstens eines Teils der im Verbrennungsmotor-Betriebszustand von dem Generator 36.2 versorgten Maschinenkomponenten, nunmehr von der externen Spannungsversorgung SV übernommen wird, mittels der auch der Elektromotor 19 mit Strom versorgt wird.

Der Lüfter 35.2 zur Kühlung des Verbrennungsmotors 12 wird im Elektromotor-Betriebszustand ebenfalls nicht benötigt und kann daher von der Hauptwelle 31 abgekoppelt werden.

Der Druckerzeuger 18, welcher die Verbrennungsmotor-Kupplung 13 und die Elektromotor-Kupplung 19.2 schaltet, kann als Kombipumpe ausgeführt sein. Dabei kann diese Kombipumpe eine zweite Pumpstufe aufweisen, die in einen Kühlkreislauf integriert ist. Mittels des Kühlkreislaufes kann ein Kühlkreis des Elektromotors 19 mit Kühlmittel versorgt werden. Somit wird die Kühlung für den Elektromotor 19 im Elektromotor-Betriebszustand bereitgestellt. Selbstverständlich ist es auch denkbar, dass diese beiden Funktionen getrennt werden. Somit können auch zwei voneinander getrennte Pumpeinheiten verwendet werden, nämlich eine erste Pumpeinheit (Druckerzeuger 18) zur Versorgung der Kupplungen 13 und 19.2 und eine zweite Pumpeinheit für den Kühlkreislauf.

Wie dies oben erwähnt wurde, sind die Verbrennungsmotor-Kupplung 13 und die Elektromotor-Kupplung 19.2 vorzugsweise als Klauenkupplungen ausgebildet. Funktionsbedingt kann es so sein, dass diese Kupplungen 13, 19.2 nur im Stand schaltbar sind.

Nun kann es so sein, dass bei einer ungünstigen Stellung die Verbrennungsmotor-Kupplung 13 und/oder die Elektromotor-Kupplung 19.2 nicht eingerückt werden kann. Um ein Einrücken der Verbrennungsmotor-Kupplung 13 dennoch zu ermöglichen, kann es vorgesehen sein, dass im Verbrennungsmotor-Betriebszustand die Motorwelle des Verbrennungsmotors 12 mittels des Anlassers des Verbrennungsmotors 12 ein Stück weit gedreht wird, bis die Verbrennungsmotor-Kupplung 13 eingerückt. Zusätzlich oder alternativ kann es auch vorgesehen sein, dass im Elektromotor-Betriebszustand die Abtriebswelle des Elektromotors 19 gedreht wird, um ein Einrücken der Elektromotor-Kupplung 19.2 zu ermöglichen.

## Patentansprüche

1. Antrieb für eine mobile Materialverarbeitungsanlage (1), insbesondere für einen Gesteinsbrecher, mit einem Verbrennungsmotor (12) und einem Elektromotor (19), wobei der Verbrennungsmotor (12) mittels einer Verbrennungsmotor-Kupplung (13) und der Elektromotor (19) mittels einer Elektromotor-Kupplung (19.2) an einen mechanischen Antriebsstrang an dessen Antriebsseite wahlweise an- oder von diesem abkoppelbar sind, wobei der Antriebsstrang eine Abtriebsseite mit wenigstens einem Abtrieb aufweist, wobei mittels dem oder den Abtrieben wenigstens ein Maschinenaggregat, insbesondere ein Brechaggregat (10), angetrieben wird,
**dadurch gekennzeichnet,**
**dass** die Verbrennungsmotor-Kupplung (13) und die Elektromotor-Kupplung (19.2) mittels einer Schalteinrichtung (40) miteinander wirkverbunden sind, derart, dass die Schalteinrichtung (40) in einem Verbrennungsmotor-Betriebszustand den Verbrennungsmotor (12) mittels der Verbrennungsmotor-Kupplung (13) an den Antriebsstrang an- und den Elektromotor (12) von dem Antriebsstrang abkoppelt, und dass die Schalteinrichtung (40) in einem Elektromotor-Betriebszustand den Verbrennungsmotor (12) von dem Antriebsstrang ab- und den Elektromotor (19) mittels der Elektromotor-Kupplung (19.2) an den Antriebsstrang ankoppelt.

2. Antrieb nach einem Anspruch 1, **dadurch gekennzeichnet, dass** die Verbrennungsmotor-Kupplung (13) derart ausgebildet ist, dass sie bei Anlegen eines ersten Schaltsignals öffnet, um den Verbrennungsmotor (12) von dem Antriebsstrang abzukoppeln und bei Abschalten des ersten Schaltsignals selbsttätig schließt, um den Verbrennungsmotor (12) an den Antriebsstrang anzukoppeln und/oder dass
die Elektromotor-Kupplung (13) derart ausgebildet ist, dass sie bei Anlegen eines zweiten Schaltsignals schließt, um den Elektromotor (12) an den Antriebsstrang anzukoppeln und bei Abschalten des zweiten Schaltsignals selbsttätig öffnet, um den Elektromotor (19.2) von dem Antriebsstrang abzukoppeln,
und dass vorzugsweise das erste Schaltsignal den zweiten Schaltsignal entspricht.

3. Antrieb nach Anspruch 1 oder 2, **dadurch gekennzeichnet, dass** die Schalteinrichtung (40) ein Hydrauliksystem mit einem Druckerzeuger (18) aufweist, und dass die Verbrennungsmotor-Kupplung (13) und die Elektromotor-Kupplung (19.2) über das Hydrauliksystem mit dem wenigstens einen Druckerzeuger (18) miteinander wirkverbunden sind.

4. Antrieb nach Anspruch 3, **dadurch gekennzeichnet, dass** der Druckerzeuger (18), insbesondere eine Hydraulikpumpe, mittels Hydraulikleitungen (42, 43) an die Verbrennungsmotor-Kupplung (13) und die Elektromotor-Kupplung (19.2) angeschlossen ist, wobei vorzugsweise vorgesehen ist, dass mittels der Hydraulikleitungen (42, 43) die Verbrennungsmotor-Kupplung (13) und die Elektromotor-Kupplung (19.2) hydraulisch parallelgeschaltet sind.

5. Antrieb nach einem der Ansprüche 1 bis 4, **dadurch gekennzeichnet, dass** der Antriebsstrang ein Verteilergetriebe (30) mit einer Hauptwelle (31) aufweist, dass der Verbrennungsmotor (12) mittels der schaltbaren Verbrennungsmotor-Kupplung (13) im Verbrennungsmotor-Betriebszustand an die Hauptwelle (31) ankoppelt, und dass der Elektromotor (19) im Elektromotor-Betriebszustand mittels der schaltbaren Elektromotor-Kupplung (19.2) an die Hauptwelle (31) ankoppelt.

6. Antrieb nach einem der Ansprüche 1 bis 5, **dadurch gekennzeichnet, dass** eine Drehzahlanpassungs-Einrichtung (19.1) vorgesehen ist, dass mittels der Drehzahlanpassung-Einrichtung (19.1) die Drehzahl des Elektromotors (19) und/oder des Verbrennungsmotors (12) in Richtung hin zu dem Antriebsstrang, insbesondere in Richtung hin zu der Hauptwelle (31) derart verändert ist, dass die Hauptwelle (31) im Verbrennungsmotor-Betriebszustand und im Elektromotor-Betriebszustand mit der gleichen Drehzahl oder mit einer Schwankungsbreite von ±10% mit der gleichen Drehzahl betrieben wird.

7. Antrieb nach einem der Ansprüche 1 bis 6, **dadurch gekennzeichnet, dass** der Elektromotor (19) unter Zwischenschaltung einer Elektromotor-Übersetzung (19.1) an den Antriebsstrang angekoppelt ist, wobei vorzugsweise vorgesehen ist, dass die Elektromotor-Übersetzung (19.1) die Drehzahl in Richtung zum Antriebsstrang hin zu einem kleineren Wert untersetzt.

8. Antrieb nach einem der Ansprüche 1 bis 7, **dadurch gekennzeichnet, dass** die/eine Hauptwelle die Abtriebsseite des Antriebsstrangs oder eine Abtriebsseite des Antriebsstrangs bildet, dass an der Abtriebsseite wenigstens zwei voneinander getrennte Abtriebe an die Hauptwelle (31) angeschlossen sind, und dass jeder der Abtriebe wenigstens ein Maschinenaggregat, antreibt.

9. Antrieb nach Anspruch einem der Ansprüche 1 bis 8, **dadurch gekennzeichnet, dass** wenigstens eine Kupplung, insbesondere eine schaltbare Kupplung, vorgesehen ist, und dass wenigstens eines der Maschinenaggregate unter Zwischenschaltung der Kupplung mit der Hauptwelle (31) gekoppelt ist.

10. Antrieb nach Anspruch 7 oder 8, **dadurch gekennzeichnet, dass** wenigstens eine Drehzahlübersetzung oder eine Drehzahluntersetzung vorgesehen ist, und dass wenigstens eines der Maschinenaggregate unter Zwischenschaltung der Drehzahlübersetzung oder der Drehzahluntersetzung an den Antriebstrang, insbesondere die Hauptwelle (31), angekoppelt ist.

11. Antrieb nach einem der Ansprüche 1 bis 10, **dadurch gekennzeichnet, dass** das Maschinenaggregat das Brechaggregat (10) und/oder ein Fahrantrieb (33.2) und /oder eine Hydraulikpumpe (34.2), und/oder ein Lüfter (35.2) und/oder ein elektrischer Generator (36.2) ist.

12. Antrieb nach einem der Ansprüche 5 bis 11, **dadurch gekennzeichnet, dass** die Hauptwelle (31) zumindest bereichsweise und wenigstens einer der Abtriebe zumindest bereichsweise innerhalb eines Getriebegehäuses eines Verteilergetriebes (30) des Antriebsstrangs untergebracht sind.

13. Antrieb nach einem der Ansprüche 1 bis 12, **dadurch gekennzeichnet, dass** im Verbrennungsmotor-Betriebszustand mittels des Antriebsstrangs einer/der elektrische(-r) Generator (36.2) angetrieben wird, dass der elektrische Generator (36,2) im Verbrennungsmotor-Betriebszustand wenigstens einen Elektromotor (36.3, 36.4) mit Strom versorgt, dass im Elektromotor-Betriebszustand der elektrische Generator (36.2) mittels wenigstens einer Generator-Kupplung (36.1) vom Antriebsstrang getrennt ist, und dass der wenigstens eine Elektromotor (36.3, 36.4) im Elektromotor-Betriebszustand von einer Spannungsversorgung (SV) mit Strom versorgt wird.

14. Antrieb nach einem der Ansprüche 1 bis 13, **dadurch gekennzeichnet, dass** eines der Maschinenaggregate, insbesondere der/ein Fahrantrieb zum Verfahren der Materialverarbeitungsanlage (1), mittels einer zugeordneten Kupplung, insbesondere einer Fahrantrieb-Kupplung (33.1), an den Antriebsstrang angekoppelt ist, dass der Antriebsstrang eine Hydraulikpumpe (34.2) antreibt, dass die Hydraulikpumpe (34.2) mittels einer Hydraulikleitung (38) an diese zugeordnete Kupplung angeschlossen ist, um diese zu schalten.

15. Antrieb nach einem der Ansprüche 1 bis 14, **dadurch gekennzeichnet, dass** im Verbrennungsmotor-Betriebszustand die Motorwelle des Verbrennungsmotors (12) mittels des Anlassers des Verbrennungsmotors (12) ein Stück weit gedreht wird, bis die Verbrennungsmotor-Kupplung (13) eingerückt und/oder dass im Elektromotor-Betriebszustand die Abtriebswelle des Elektromotors (19) gedreht wird, um ein Einrücken der Elektromotor-Kupplung (19.2) zu ermöglichen.

16. Antrieb nach einem der Ansprüche 1 bis 15, **dadurch gekennzeichnet, dass** die Verbrennungsmotor-Kupplung (13) und/oder die Elektromotor-Kupplung (19.2) eine federvorgespannte Kupplung ist, die beim Wechsel von einem ersten in einen zweiten Schaltzustand gegen die Vorspannung einer Feder verstellt wird.
